# EUROPEAN PATENT SPECIFICATION

(11) **EP 2 614 489 B1**
(45) Date of publication and mention of the grant of the patent: **16.04.2014**
(21) Application number: 11767911.8
(22) Date of filing: 09.09.2011
(51) Int. Cl.: G06T 7/00, G06T 13/80

(54) **METHOD AND SYSTEM FOR OBTAINING A CONTROL INFORMATION RELATED TO A DIGITAL IMAGE**
VERFAHREN UND SYSTEM FÜR DEN ERHALT VON STEUERINFORMATIONEN IM ZUSAMMENHANG MIT EINEM DIGITALBILD
PROCÉDÉ ET SYSTÈME POUR OBTENIR DE L'INFORMATION DE COMMANDE SE RAPPORTANT À UNE IMAGE NUMÉRIQUE

(30) Priority: 10.09.2010 US 381573 P; 10.09.2010 EP 10009442
(43) Date of publication of application: 17.07.2013
(73) Proprietor: Deutsche Telekom AG, 53113 Bonn (DE)
(72) Inventor: AL-SAIEGH, Sarmad, 64285 Darmstadt (DE)
(74) Representative: Schwöbel, Thilo K.
(86) International application number: PCT/EP2011/004538
(87) International publication number: WO 2012/031767

(56) References cited:
- EP-A1- 1 923 835
- EP-A2- 1 235 182
- WO-A1-00/08853
- US-A1- 2006 115 185
- US-A1- 2006 132 507

## Description

### BACKGROUND

The present invention relates to a method and a system for obtaining a control information related to a digital image, and more specifically to technology for realizing a Ken Burns effect with regard to a digital image.

The evolution of automated photo slideshow type presentations on personal computers, projected displays, and entertainment devices has become increasingly common as users amass large collections of digital images. A number of the methods used to display these slideshow type presentations incorporate some form of animation such as panning around on an image or moving an image within a viewing region in an attempt to make the presentation more interesting. Some forms of this type of animation are commonly known as "auto-rostruming" or the "Ken Burns effect".

The "Ken Burns effect", generally, corresponds to pan across a digital image (or photo) and/or to zoom in and out of the digital image (or photo) as it is displayed. The zooming and panning across digital images or photographs creates a more vivid atmosphere and keeps the viewer entertained.

A face image display, face image display method, and face image display program is known from document EP 1 923 835 A1 which describes a system for creating a video sequence (slide show animation) from a still image containing faces of people, and fails to disclose computing score values which allow for information combination by means of the product of the color of a segment with its distance from all other segments.

Users might store different kinds of multimedia data in the media centre and present such data using different devices such as personal computers, smart phones, and television sets.

Historically, the definition of the starting point (of a video sequence within a digital image or a photograph) and the end point (as well as of further control parameters or control information) have been provided manually.

Currently such automated applications of image movement or panning are fairly crude and typically applied in a random fashion. Sometimes this random application of movement and panning may generate an acceptable or interesting result, such as when an image of a tall building is randomly panned up or down to show the profile of the building in the same manner that human eyes would normally scan an actual tall building. However, current automated animation methods are just as likely (and often more likely) to produce a movement or panning animation that is not acceptable and instead detracts from an image or images being displayed in a slideshow type presentation.

Thus, it is desirable to provide a system and a method that makes presentations of digital images (or photos) more enjoyable.

### SUMMARY

An object of the present invention is to overcome - at least partly - the limitations of the current state of the art, and to provide a possibility to automatically provide the generation of video sequences based on a digital (still) image in a "Ken Burns"-Effect manner such that the automatically generated video sequences are more natural and appealing to a viewer.

The object of the present invention is achieved by a method disclosed in claim 1.

According to the present invention, it is advantageously possible to select the image segments in a natural manner, i.e. with a higher probability, the image segments are automatically chosen such that this choice corresponds at least partly with the choice a human viewer would have applied to the digital image.

In the context of the present invention, the term control information corresponds to any meta information of the digital image that can be used to define a (virtual) video sequence of (parts of) the digital image.

According to the present invention, it is preferred that the control information is used for generating a virtual video sequence obtained from the digital image.

Thereby, it is advantageously possible to realize a Ken Burns effect automatically and with a high degree of correspondence to the natural movement of the eye of a viewer when viewing the photograph or digital image.

According to the present invention, it is furthermore preferred that the control information defines the virtual video sequence such that at the beginning, the video sequence is centred on the first image segment, and at the end, the video sequence is centred on the second image segment.

Thereby, it is advantageously possible to use an important portion of the digital image to realize the virtual video sequence.

It is furthermore preferred according to the present invention that the image segments correspond to represented objects of the digital image.

According to the present invention, it is still furthermore preferred that the determination of the first image segment and the second image segment is as disclosed in claim 4.

Thereby, it is easily and effectively possible to realize a Ken Burns effect automatically and with a still better degree of correspondence to the natural movement of the eye of a viewer when viewing the photograph or digital image.

Furthermore, it is preferred that the colour value of the first image segment or of the second image segment corresponds to the inverse of the grey scale value of the first image segment or of the second image segment.

Thereby, it is advantageously possible to focus on eye catching parts of the digital image.

According to further preferred embodiments of the present invention, it is preferred
-- that the step of providing the segmentation of the digital image into a plurality of image segments comprising at least the first image segment and the second image segment comprises the sub-steps of:
   -- converting the digital image into a grey scale image,
   -- applying a histogram equalization to the digital image,
   -- applying a median filter,
   -- applying a segmentation based on pixel intensities, and/or that
-- the step of providing the segmentation of the digital image into a plurality of image segments comprising at least the first image segment and the second image segment comprises the sub-steps of grey scaling the digital image and/or clustering small segments to the best nearest neighbour.

Thereby, it is advantageously possible according to the present invention that objects within the digital image can be accurately determined.

According to a preferred embodiments of the present invention, it is preferred that the colour value of the first image segment and of the second image segment is opposite of the dominant colour value of the digital image.

Thereby, it is advantageously possible according to the present invention to provide a definition of the control information that corresponds to a still more natural choice of the relevant portions of the digital image.

The present invention further relates to a system disclosed in claim 9.

Additionally, the present invention relates to a program disclosed in claim 14.

### BRIEF DESCRIPTION OF THE DRAWINGS

Figure 1 schematically illustrates a flow diagram illustrating the method according to the present invention.
Figures 2 and 3 schematically illustrate processing steps of the method according to the present invention.
Figures 4a to 4g schematically illustrate the inventive method based on an example image.
Figure 5 schematically illustrates a system according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

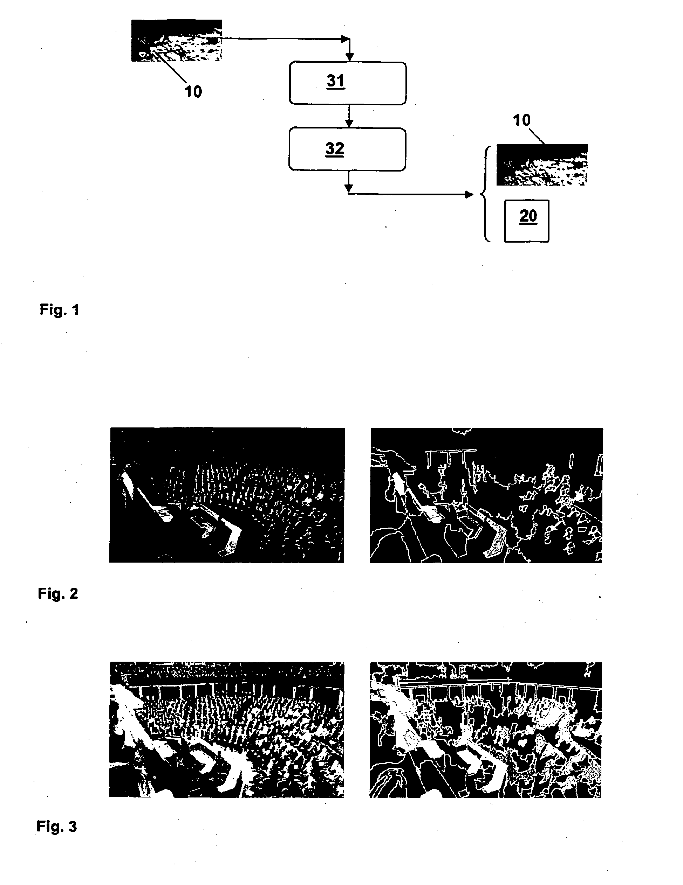

In Figure 1, a flow diagram schematically illustrates the method according to the present invention. The inventive method relates to the processing of digital image information, wherein a digital image 10 is processed by means of the inventive method for obtaining a control information 20. The inventive method comprises a first main step 31 and a second main step 31, wherein the first main step 31 corresponds to providing a segmentation of the digital image 10 into a plurality of image segments 11, 12, 13 comprising at least a first image segment 11 and a second image segment 12, and wherein the second main step 32 corresponds to determining the first image segment 11 and the second image segment 12 such that within the plurality of image segments 11, 12, 13, a product comprising, on the one hand, a colour value of the first image segment 11 or of the second image segment 12 and, on the other hand, the distance between the first image segment 11 and the second image segment 12 is maximized.

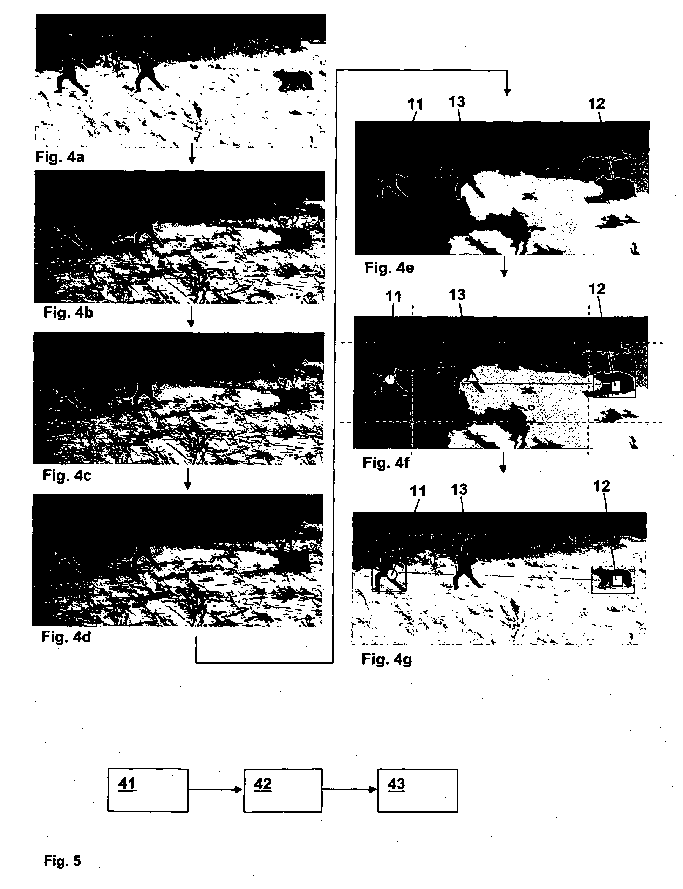

The image segments 11, 12, 13 are shown in Figures 4e, 4f and 4g.

According to a preferred embodiment of the present invention, the inventive method comprises a plurality of sub-steps corresponding to:
-- applying a histogram equalization to the digital image 10,
-- applying a median filter, and
-- applying a segmentation based on pixel intensities.

These sub-steps improve the detection quality of the image segments 11, 12, 13 within the digital image 10 that serve as the starting point and the ending point of an animation (i.e. a virtual video sequence of parts of the digital image 10). The identification of segments is based on their size. The image segments 11, 12, 13 finally chosen to be the starting point and the ending point of the animation should have high contrast to other objects of the digital image 10, i.e. these images (serving as starting point and as ending point of the animation) should serve as "eye catchers". Hereinafter, the image segments 11, 12, 13 that serve as starting point and as ending point of the animation are also called first image segment 11 and second image segment 12. However, at this step of the inventive method, the two image segments serving as starting point and as ending point for the animation (within a plurality of image segments 11, 12 ,13,) are not yet defined. One condition the first image segment 11 and the second image segment 12 need to fulfil is that the distance between the first and second image segments 11, 12 has to be the longest distance possible, that means that the following equation holds true: if the distance between the first image segment 11 and the second image segment 12 is superior to the distance between the first image segment 11 and a third image segment 13 or the distance between the second image segment 12 and the third image segment 13, then the algorithm (i.e. the inventive method) will prefer the first and second image segments 11, 12 for start and end point. Thus, a comparably long distance (between the first and second image segment 11, 12) confers an increased length to the animation, and hence results in a more amusing animation. The distance between the first image segment 11 and the second image segment 12 is preferably calculated using the centre of each image segment 11, 12, 13, e.g. based on a calculation of "centre of gravity" of all pixels belonging to a specific image segment 11, 12, 13 (i.e. the arithmetic average of the x-coordinates of all pixels belonging to the first image segment 11 corresponds to the x-coordinate of the "centre of gravity" of the first image segment 11, and the arithmetic average of the y-coordinates of all pixels belonging to the first image segment 11 corresponds to the y-coordinate of the "centre of gravity" of the first image segment 11; and an analogous calculation holds with respect to the centre of the second image segment 12). Alternatively, the centre of each image segment 11, 12, 13 can be provided as the centre point of a segment's bounding box (i.e. the smallest rectangular box comprising all the pixels of an image segment 11, 12, 13. The centre of each image segment corresponds to the focus point for the human perception. Furthermore, the colour and the size of the image segment 11, 12, 13 play a role in the segment selection. In the approach according to the present invention, the image will be observed analogously to the so-called theatre stage. The theatre stage is based on the idea to divide the stage (of a theatre) into nine blocks and place actors in the middle (horizontally extending) row in order to catch the audience's attention. Since segments that are not located within the middle row are likely to be less relevant, according to a preferred embodiment of the present invention, only segments with their centre point being located in the middle row are retained for further processing. It is preferred according to the present invention that each image is processed according to the steps of
-- segmentation,
-- labelling,
-- identification of image segment candidates,
-- result evaluation, and
-- determination of image segment choice.

In the following, these steps are explained with reference to Figures 4a to 4g:

Figure 4a shows the unprocessed digital image 10.

Figure 4b shows the digital image 10 after the application of a histogram equalization step. This method usually increases the global contrast of many images, especially when the usable data of the image is represented by close contrast values. Through this adjustment, the intensities can be better distributed on the histogram. This allows for areas of lower local contrast to gain a higher contrast. Histogram equalization accomplishes this by effectively spreading out the most frequent intensity values. The method is useful in images with backgrounds and foregrounds that are both bright or both dark.

In Figures 2 and 3, a comparison of two situations with and without the application of the histogram equalization step of the method according to the present invention is schematically illustrated. In Figure 2, the histogram equalization step has not been performed, leading to image segments of an increased size; and in Figure 3, the histogram equalization step has been performed. In both Figures 2 and 3, on the left hand side the original digital image is shown and on the right hand side, the processed digital image is shown.

Figure 4c shows the digital image 10 after the application of a grey filter, i.e. the colours of the image are removed such that only grey values remain. This can be done with respect to a combination of the colors of the digital image 10. Alternatively, the application of the grey filter (as well as the application of the histogram equalization step) can be provided for each colour of the digital image 10 separately.

Figure 4d shows the digital image 10 after the application of a median filter. Thereby, it is possible to provide a noise reduction to the digital image 10 . The median filter is a nonlinear digital filtering technique, often used to remove noise. Such noise reduction typically improves the results of later processing for the detection of the image segments 11, 12 ,13. Median filtering is very widely used in digital image processing because under certain conditions, it preserves edges whilst removing noise: The main idea of the median filter is to run through the signal entry by entry, replacing each entry with the median of neighboring entries. The pattern of neighbors is called the "window", which slides, entry by entry, over the entire signal. For example, it is possible to use a 9X9 matrix or a 11X11 matrix as the window for the median filter. In such a case (of an odd number width and height of the matrix) the median is simply the middle value after all the entries in the window are sorted numerically.

Figure 4e shows the digital image 10 after the application of the segmentation, i.e. only a comparably low number of different grey values are allowed in the histogram, which grows the image regions or segments (having the same intensity). This step terminates the segmentation step mentioned above. The result of image segmentation is a set of segments that collectively cover the entire digital image 10. Each of the pixels in a region are similar with respect to some characteristic or computed property, such as color, intensity, or texture. Adjacent regions are significantly different with respect to the same characteristic(s). The application of the segmentation can comprise the clustering of small image segments 11, 12, 13 to the best nearest neighbour.

After the segmentation step, the labelling of the image segments 11, 12, 13 is performed. This includes the count of the image segments and a comparison with the most occurring colour: In case that the most important grey values are dark, then the light grey image segment have to be observed, and in case that the most important grey values are light, then the dark grey image segment have to be observed. Furthermore, the segment labelling comprises the definition of an identification information for each image segment 11, 12 ,13, the computation of the grey value and the average, the computation of the area as well as the computation of the centre of the image segment, the position of the image segment and the distance to the other image segments.

The next step according to the present invention refers to the identification of image segment candidates: This refers to the elimination of the smallest image segments from further consideration in the inventive method. For example, image segments smaller than 0.2 % of the total image size are eliminated from consideration.

In the result evaluation step of the method according to the present invention, the digital image is divided into nine blocks shown in Figure 4f (schematically represented by means of two horizontal auxiliary (dashed) lines and by means of two vertical auxiliary (dashed) lines). According to the present invention, only the image segments 11, 12, 13 having their centre in between the two horizontal (dashed) lines are taken into consideration.

Then the image segments to be taken into consideration for the animation are to be determined (i.e. the "first image segment 11" and the "second image segment 12"). Three criteria are important for this determination, namely area (i.e. the surface area of the image segment), the colour value (i.e. whether it is light grey or dark grey), and the distance to the other image segments. A importance or relevance value can be computed by means of taking the product of the colour value and the distance or by means of the colour value and the square of the distance (to all the other image segment fulfilling the a.m. requirements).

The step of the determination of the image segment choice takes into consideration the image segments having the highest importance or relevance value. This is shown in Figures 4f and 4g: in Figure 4f, there are three image segments 11, 12, 13 present whereas in Figure 4g, only the first and second image segments 11, 12 are retained as their distances is more important.

Figure 5 schematically illustrates a system 42 according to the present invention: a image capturing device 41 captures the digital image 10 and provides the digital image 10 to the system 42 implementing the method according to the present invention. The processed digital image 10 together with the obtained control information 20 is then fed to a display device 43 representing the digital image 10 according to the control information 20 for an enhanced entertainment of the viewer.

## Claims

1. Method for obtaining a control information (20) related to a digital image (10), the control information (20) being used for generating a virtual video sequence obtained from the digital image (10), the method comprising the steps of:
-- processing the digital image (10) by
-- providing a segmentation of the digital image (10) into a plurality of image segments (11, 12, 13) comprising at least a first image segment (11) and a second image segment (12), and by
-- determining the first image segment (11) and the second image segment (12) having the highest importance values within the plurality of image segments (11, 12, 13) wherein, the importance value of an image segment is computed by means of a product comprising, on the one hand, a colour value of an image segment, and, on the other hand, the distance of the image segment to all the other image segments and
-- using the location of the first image segment (11) and the location of the second image segment (12) to define the image control information (20).

2. Method according to claim 1, wherein the control information (20) defines the virtual video sequence such that at the the video sequence starts at the first image segment (11) and ends at the second image segment (12).

3. Method according to one of the preceding claims, wherein the image segments (11, 12, 13) correspond to represented objects of the digital image (10).

4. Method according to any of the preceding claims, wherein the determination of the first image segment (11) and the second image segment (12) is provided such that within the plurality of image segments (11, 12, 13), the importance value of an image segment is computed by means of the product of, on the one hand, the colour value of an image segment, and, on the other hand, the square of the distance of the image segment to all the other image segments.

5. Method according to any of the preceding claims, wherein the colour value of the first image segment (11) or of the second image segment (12) corresponds to the inverse of the grey scale value of the first image segment (11) or of the second image segment (12).

6. Method according to any of the preceding claims, wherein the step of providing the segmentation of the digital image (10) into a plurality of image segments (11, 12, 13) comprising at least the first image segment (11) and the second image segment (12) comprises the sub-steps of:
-- converting the digital image into a grey scale image
-- applying a histogram equalization to the digital image (10),
-- applying a median filter,
-- applying a segmentation based on pixel intensities.

7. Method according to any of the preceding claims, wherein the step of providing the segmentation of the digital image (10) into a plurality of image segments (11, 12, 13) comprising at least the first image segment (11) and the second image segment (12) comprises the sub-steps of grey scaling the digital image (10) and/or clustering small segments to the best nearest neighbour.

8. Method according to any of the preceding claims, wherein the colour value of the first image segment (11) and of the second image segment (12) is opposite of the dominant colour value of the digital image (10).

9. System (42) for obtaining a control information (20) related to a digital image (10), the control information (20) being used for generating a virtual video sequence obtained from the digital image (10),
-- wherein the digital image (10) is processed by
-- providing a segmentation of the digital image (10) into a plurality of image segments (11, 12, 13) comprising at least a first image segment (11) and a second image segment (12), and by
-- determining the first image segment (11) and the second image segment (12) having the highest importance values within the plurality of image segments (11, 12, 13) wherein the importance value of an image segment is computed by means of a product comprising, on the one hand, a colour value of an image segment and, on the other hand, the distance of the image segment to all the other image segments and
-- wherein the definition of the image control information depends on the location of the first image segment (11) and the location of the second image segment (12).

10. System (42) according to claim 9, wherein the determination of the first image segment (11) and the second image segment (12) is provided such that within the plurality of image segments (11, 12, 13), the importance value of an image segment is computed by means of the product of, on the one hand, the colour value of an image segment; and, on the other hand, the square of the distance of the image segment to all the other image segments.

11. System according to claims 9 or 10, wherein the colour value of the first image segment (11) or of the second image segment (12) corresponds to the inverse of the grey scale value of the first image segment (11) or of the second image segment (12).

12. System according to one of claims 9 to 11, wherein the step of providing the segmentation of the digital image (10) into a plurality of image segments (11, 12, 13) comprising at least the first image segment (11) and the second image segment (12) comprises the sub-steps of:
-- applying a histogram equalization to the digital image (10),
-- applying a median filter,
-- applying a segmentation based on pixel intensities.

13. System (42) according to one of claims 9 to 12, wherein the step of providing the segmentation of the digital image (10) into a plurality of image segments (11, 12, 13) comprising at least the first image segment (11) and the second image segment (12) comprises the sub-steps of grey scaling the digital image (10) and/or clustering small segments to the best nearest neighbour.

14. Program comprising a computer readable program code for executing a method according to one of claims 1 to 8 or for configuring or controlling a system (42) according to one of claims 9 to 13.

## Patentansprüche

1. Verfahren zum Erhalten einer Steuerungsinformation (20) in Bezug auf ein digitales Bild (10), wobei die Steuerungsinformation (20) zum Erzeugen einer aus dem digitalen Bild (10) erhaltenen virtuellen Videosequenz verwendet wird, wobei das Verfahren die folgenden Schritte umfasst:
- das Bereitstellen des digitalen Bilds (10) durch
- das Bereitstellen einer Segmentierung des digitalen Bilds (10) in eine Mehrzahl von Bildsegmenten (11, 12, 13), die mindestens ein erstes Bildsegment (11) und ein zweites Bildsegment (12) umfassen, und durch
- das Bestimmen des ersten Bildsegments (11) und des zweiten Bildsegments (12), welche die höchsten Bedeutungswerte innerhalb der Mehrzahl von Bildsegmenten (11, 12, 13) aufweisen, wobei der Bedeutungswert eines Bildsegments berechnet wird durch ein Produkt, das einerseits einen Farbwert eines Bildsegments umfasst und andererseits den Abstand des Bildsegments zu allen anderen Bildsegmenten umfasst; und
- das Verwenden der Position des ersten Bildsegments (11) und der Position des zweiten Bildsegments (12), um die Bildsteuerungsinformation (20) zu definieren.

2. Verfahren nach Anspruch 1, wobei die Steuerungsinformation (20) die virtuelle Videosequenz definiert, so dass die Videosequenz an dem ersten Bildsegment (11) beginnt und an dem zweiten Bildsegment (12) endet.

3. Verfahren nach einem der vorstehenden Ansprüche, wobei die Bildsegmente (11, 12, 13) dargestellten Objekten des digitalen Bilds (10) entsprechen.

4. Verfahren nach einem der vorstehenden Ansprüche, wobei die Bestimmung des ersten Bildsegments (11) und des zweiten Bildsegments (12) so bereitgestellt wird, dass innerhalb der Mehrzahl von Bildsegmenten (11, 12, 13) der Bedeutungswert eines Bildsegments berechnet wird durch ein Produkt, das einerseits einen Farbwert eines Bildsegments umfasst und andererseits das Quadrat des Abstands des Bildsegments zu allen anderen Bildsegmenten umfasst.

5. Verfahren nach einem der vorstehenden Ansprüche, wobei der Farbewert des ersten Bildsegments (11) oder des zweiten Bildsegments (12) dem umgekehrten Graustufenwert des ersten Bildsegments (11) oder des zweiten Bildsegments (12) entspricht.

6. Verfahren nach einem der vorstehenden Ansprüche, wobei der Schritt des Bereitstellens einer Segmentierung des digitalen Bilds (10) in eine Mehrzahl von Bildsegmenten (11, 12, 13), die mindestens ein erstes Bildsegment (11) und ein zweites Bildsegment (12) umfassen, die folgenden Unterschritte umfasst:
- das Umwandeln des digitalen Bilds in ein Graustufenbild;
- das Anwenden eines Histogrammausgleichs an dem digitalen Bild (10);
- das Anwenden eines Medianfilters;
- das Anwenden einer auf Pixelintensitäten basierenden Segmentierung.

7. Verfahren nach einem der vorstehenden Ansprüche, wobei der Schritt des Bereitstellens einer Segmentierung des digitalen Bilds (10) in eine Mehrzahl von Bildsegmenten (11, 12, 13), die mindestens ein erstes Bildsegment (11) und ein zweites Bildsegment (12) umfassen, die Unterschritte der Graustufendarstellung des digitalen Bilds (10) und/oder des Clusterns kleiner Segmente an den besten nächsten Nachbarn umfasst.

8. Verfahren nach einem der vorstehenden Ansprüche, wobei der Farbwert des ersten Bildsegments (11) und des zweiten Bildsegments (12) entgegengesetzt ist zu dem dominierenden Farbwert des digitalen Bilds (10).

9. System (42) zum Erhalten einer Steuerungsinformation (20) in Bezug auf ein digitales Bild (10), wobei die Steuerungsinformation (20) zum Erzeugen einer aus dem digitalen Bild (10) erhaltenen virtuellen Videosequenz verwendet wird,
- wobei das digitale Bild (10) verarbeitet wird durch
- das Bereitstellen einer Segmentierung des digitalen Bilds (10) in eine Mehrzahl von Bildsegmenten (11, 12, 13), die mindestens ein erstes Bildsegment (11) und ein zweites Bildsegment (12) umfassen, und durch
- das Bestimmen des ersten Bildsegments (11) und des zweiten Bildsegments (12), welche die höchsten Bedeutungswerte innerhalb der Mehrzahl von Bildsegmenten (11, 12, 13) aufweisen, wobei der Bedeutungswert eines Bildsegments berechnet wird durch ein Produkt, das einerseits einen Farbwert eines Bildsegments umfasst und andererseits den Abstand des Bildsegments zu allen anderen Bildsegmenten umfasst; und
- wobei die Definition der Bildsteuerungsinformation von der Position des ersten Bildsegments (11) und der Position des zweiten Bildsegments (12) abhängig ist.

10. System (42) nach Anspruch 9, wobei die Bestimmung des ersten Bildsegments (11) und des zweiten Bildsegments (12) so bereitgestellt wird, dass innerhalb der Mehrzahl von Bildsegmenten (11, 12, 13) der Bedeutungswert eines Bildsegments berechnet wird durch ein Produkt, das einerseits einen Farbwert eines Bildsegments umfasst und andererseits das Quadrat des Abstands des Bildsegments zu allen anderen Bildsegmenten umfasst.

11. System nach Anspruch 9 oder 10, wobei der Farbewert des ersten Bildsegments (11) oder des zweiten Bildsegments (12) dem umgekehrten Graustufenwert des ersten Bildsegments (11) oder des zweiten Bildsegments (12) entspricht.

12. System nach einem der Ansprüche 9 bis 11, wobei der Schritt des Bereitstellens einer Segmentierung des digitalen Bilds (10) in eine Mehrzahl von Bildsegmenten (11, 12, 13), die mindestens ein erstes Bildsegment (11) und ein zweites Bildsegment (12) umfassen, die folgenden Unterschritte umfasst:
- das Umwandeln des digitalen Bilds in ein Graustufenbild;
- das Anwenden eines Histogrammausgleichs an dem digitalen Bild (10);
- das Anwenden eines Medianfilters;
- das Anwenden einer auf Pixelintensitäten basierenden Segmentierung.

13. System (42) nach einem der Schritte 9 bis 12, wobei der Schritt des Bereitstellens einer Segmentierung des digitalen Bilds (10) in eine Mehrzahl von Bildsegmenten (11, 12, 13), die mindestens ein erstes Bildsegment (11) und ein zweites Bildsegment (12) umfassen, die Unterschritte der Graustufendarstellung des digitalen Bilds (10) und/oder des Clusterns kleiner Segmente an den besten nächsten Nachbarn umfasst.

14. Programm, das einen computerlesbaren Programmcode zur Ausführung eines Verfahrens nach einem der Ansprüche 1 bis 8 oder zur Konfiguration oder Steuerung eines Systems (42) nach einem der Ansprüche 9 bis 13 umfasst.

## Revendications

1. Procédé d'obtention d'informations de commande (20) associées à une image numérique (10), les informations de commande (20) étant utilisées pour générer une séquence vidéo virtuelle obtenue à partir de l'image numérique (10), le procédé comprenant les étapes consistant à :
traiter l'image numérique (10) en
effectuant une segmentation de l'image numérique (10) en une pluralité de segments d'image (11,12, 13) comprenant au moins un premier segment d'image (11) et un second segment d'image (12), et en
déterminant le premier segment d'image (11) et le second segment d'image (12) ayant les valeurs d'importance les plus élevées parmi la pluralité de segments d'image (11, 12, 13), dans lequel la valeur d'importance d'un segment d'image est calculée à l'aide d'un produit comprenant, d'une part, une valeur de couleur d'un segment d'image, et, d'autre part, la distance entre le segment d'image et tous les autres segments d'image, et
utiliser l'emplacement du premier segment d'image (11) et l'emplacement du second segment d'image (12) pour définir les informations de commande d'image (20).

2. Procédé selon la revendication 1, dans lequel les informations de commande (20) définissent la séquence vidéo virtuelle de sorte que la séquence vidéo commence au premier segment d'image (11) et se termine au second segment d'image (12).

3. Procédé selon l'une des revendications précédentes, dans lequel les segments d'image (11, 12, 13) correspondent à des objets représentés de l'image numérique (10).

4. Procédé selon l'une quelconque des revendications précédentes, dans lequel la détermination du premier segment d'image (11) et du second segment d'image (12) est effectuée de sorte que dans la pluralité de segments d'image (11, 12, 13), la valeur d'importance d'un segment d'image est calculée à l'aide du produit, d'une part, de la valeur de couleur d'un segment d'image, et, d'autre part, du carré de la distance entre le segment d'image et tous les autres segments d'image.

5. Procédé selon l'une quelconque des revendications précédentes, dans lequel la valeur de couleur du premier segment d'image (11) ou du second segment d'image (12) correspond à l'inverse de la valeur d'échelle de gris du premier segment d'image (11) ou du second segment d'image (12).

6. Procédé selon l'une quelconque des revendications précédentes, dans lequel la segmentation de l'image numérique (10) en une pluralité de segments d'image (11, 12, 13) comprenant au moins le premier segment d'image (11) et le second segment d'image (12) comprend les sous-étapes consistant à :
convertir l'image numérique en une image à échelle de gris,
appliquer une égalisation d'histogramme à l'image numérique (10),
appliquer un filtre médian,
appliquer une segmentation basée sur des intensités de pixels.

7. Procédé selon l'une quelconque des revendications précédentes, dans lequel la segmentation de l'image numérique (10) en une pluralité de segments d'image (11, 12, 13) comprenant au moins le premier segment d'image (11) et le second segment d'image (12) comprend les sous-étapes consistant à mettre à l'échelle de gris l'image numérique (10) et/ou à regrouper de petits segments au plus proche voisin.

8. Procédé selon l'une quelconque des revendications précédentes, dans lequel la valeur de couleur du premier segment d'image (11) et du second segment d'image (12) est opposée à la valeur de couleur dominante de l'image numérique (10).

9. Système (42) d'obtention d'informations de commande (20) associées à une image numérique (10), les informations de commande (20) étant utilisées pour générer une séquence vidéo virtuelle obtenue à partir de l'image numérique (10),
dans lequel l'image numérique (10) est traitée en
effectuant une segmentation de l'image numérique (10) en une pluralité de segments d'image (11, 12, 13) comprenant au moins un premier segment d'image (11) et un second segment d'image (12), et en
déterminant le premier segment d'image (11) et le second segment d'image (12) ayant les valeurs d'importance les plus élevées parmi la pluralité de segments d'image (11, 12, 13), dans lequel la valeur d'importance d'un segment d'image est calculée à l'aide d'un produit comprenant, d'une part, une valeur de couleur d'un segment d'image, et, d'autre part, la distance entre le segment d'image et tous les autres segments d'image, et
dans lequel la définition des informations de commande d'image dépend de l'emplacement du premier segment d'image (11) et de l'emplacement du second segment d'image (12).

10. Système (42) selon la revendication 9, dans lequel la détermination du premier segment d'image (11) et du second segment d'image (12) est effectuée de sorte que dans la pluralité de segments d'image (11, 12, 13), la valeur d'importance d'un segment d'image est calculée à l'aide du produit, d'une part, de la valeur de couleur d'un segment d'image, et, d'autre part, du carré de la distance entre le segment d'image et tous les autres segments d'image.

11. Système selon la revendication 9 ou 10, dans lequel la valeur de couleur du premier segment d'image (11) ou du second segment d'image (12) correspond à l'inverse de la valeur d'échelle de gris du premier segment d'image (11) ou du second segment d'image (12).

12. Système selon l'une quelconque des revendications 9 à 11, dans lequel la segmentation de l'image numérique (10) en une pluralité de segments d'image (11, 12, 13) comprenant au moins le premier segment d'image (11) et le second segment d'image (12) comprend les sous-étapes consistant à :
appliquer une égalisation d'histogramme à l'image numérique (10),
appliquer un filtre médian,
appliquer une segmentation basée sur des intensités de pixels.

13. Système (42) selon l'une quelconque des revendications 9 à 12, dans lequel la segmentation de l'image numérique (10) en une pluralité de segments d'image (11, 12, 13) comprenant au moins le premier segment d'image (11) et le second segment d'image (12) comprend les sous-étapes consistant à mettre à l'échelle de gris l'image numérique (10) et/ou à regrouper de petits segments au plus proche voisin.

14. Programme comprenant un code de programme lisible par ordinateur pour exécuter un procédé selon l'une des revendications 1 à 8 ou pour configurer ou commander un système (42) selon l'une des revendications 9 à 13.
